# EUROPEAN PATENT APPLICATION

(11) **EP 2 432 101 A1**
(43) Date of publication of application: **21.03.2012**
(21) Application number: 10774544.0
(22) Date of filing: 12.05.2010
(51) Int. Cl.: H02K 7/06

(54) **ELECTRICAL PUSH DEVICE**

(30) Priority: 14.05.2009 CN 200910043401; 14.05.2009 CN 200920064418 U; 04.01.2010 CN 201010003054; 04.01.2010 CN 201020002671 U
(71) Applicant: Xie, Xingyun, Hunan 410205 (CN); Xiong, Yuehua, Hunan 410205 (CN)
(72) Inventor: YANG, Guoping, Hunan 410205 (CN); XIONG, Yuehua, Hunan 410205 (CN)
(74) Representative: Marshall, Caroline
(86) International application number: PCT/CN2010/072651
(87) International publication number: WO 2010/130203

(57) **Abstract**

The present invention discloses an electrical push device, comprising a motor (1), a housing (2), and an axially movable push rod (3) provided in the housing (2). A lead screw (4) whose helix rise angle is larger than the locking angle is provided in the push rod (3). A screw nut (5) is provided in the inner end of the push rod (3), and the screw nut and the lead screw (4) constitute a screw pair. The inner segment of the lead screw is provided with a supporting bearing (8). The inner end of the lead screw (4) is connected with the shaft of the motor (1). The electrical push device includes an electromagnet (6) and a brake pair (7). A spring (6b) acting on the moving core (6a) of the electromagnet (6) is provided in the stationary core (6c) of the electromagnet (6). The brake pair (7) includes a rotating brake disc (7a) and a translational movement brake disc (7b). The rotating brake disc (7a) is connected with the shaft of the motor (1). The translational movement brake disc (7b) is connected with the moving core (6a) of the electromagnet (6) and axially moves in a straight line along with the moving core (6a).

## Description

### Field of the Invention

The present invention relates to a device for pushing a member or a mechanism to move, and in particular, to an electrical push device.

### Description of the Related Art

Patent Document CN2847660Y published on December 13, 2006 discloses "a novel electrical push rod". The electrical push rod for an arrester, comprises a motor, an upper stroke switch, a down stroke switch, and a housing. The motor is connected with the lower end of the housing. An outwardly movably push rod is provided in the upper part of the housing, and a spring seat is provided in the lower part. The output shaft of the motor is connected with a lead screw. The inner end of the lead screw and the spring seat constitute a screw pair. The upper segment of the lead screw is provided with a compression spring acting on the push rod. The working process is operated as follows: the motor is rotated to drive the lead screw to rotate, through the screw pair function constituted by the lower part of the spring seat and the spring seat, the spring seat moves along the lead screw and acts on the compression spring, the force by compressing the compression spring acts on the push rod to extend the push rod outwardly to control the operation state of the arrester, so as to form a certain operation purpose. However, once the helix rise angle of the lead screw is larger than the locking angle thereof, the motor should be electrified in long-term to keep the push rod in the outward moved state, which causes huge power consumption. Further, the long-term electrified motor results in the drawbacks liking high temperature rise and many malfunctions. Once the helix rise angle of the lead screw is smaller than the locking angle thereof, the motor should be operated in a normal-reverse conversion manner to satisfy the requirements for the reciprocating operation of the push rod, which also results in the drawbacks liking huge power consumption, high temperature rise and many malfunctions. Further, once the electrified motor is accidentally stopped, the push rod can not go back to the initial state automatically from the outward moved state.

### SUMMARY OF THE INVENTION

The present invention has been made to overcome or alleviate at least one of the above-mentioned problems and drawbacks existing in the prior art.

Accordingly, it is an object of the present invention to provide an electrical push device, wherein the lead screw of the electrical push device has its helix rise angle larger than its locking angle, wherein the push rod is kept in the outward moved state without the long-term electrification of the motor, which may save the power energy, decrease the operating temperature rise, and, reduce the malfunctions. The device is not only suitable for the arrester but also suitable for causing the movement by pushing other members or mechanisms.

According to one aspect of the present invention, an electrical push device is provided. The electrical push device comprises a motor, a housing, and an axially movable push rod provided in the housing. A lead screw whose helix rise angle is larger than the locking angle is provided in the push rod. A screw nut is provided in the inner end of the push rod, and the screw nut and the lead screw constitute a screw pair. The inner segment of the lead screw is provided with a supporting bearing. The inner end of the lead screw is connected with the shaft of the motor. The electrical push device includes an electromagnet and a brake pair. A spring acting on the moving core of the electromagnet is provided in the stationary core of the electromagnet. The brake pair includes a rotating brake disc and a translational movement brake disc. The rotating brake disc is connected with the shaft of the motor. The translational movement brake disc is connected with the moving core of the electromagnet and axially moves in a straight line along with the moving core.

The working process is operated as follows: once the electromagnet is electrified, the electric magnetic force overcomes the force of the spring member, and the translational movement brake disc moves axially along with the moving core and disengages from the rotating brake disc. The motor is electrified to rotate and also drives the lead screw to rotate, and the push rod drives the member or mechanism connected with the push rod to move till the work condition required motion state is achieved, then, the power supply to the motor is cut off and the motor is stopped to rotate, while the electromagnet is powered off simultaneously. The translational movement brake disc moves along with the moving core under the action of the spring member and engages with the rotating brake disc. The braking force from the engagement between the translational movement brake disc and the rotating brake disc prevent the motor to rotate, and the lead screw is stopped to rotate, such that in the case that the motor is powered off, the push rod is kept in the moved state to satisfy the work condition required motion state of the moved member or mechanism. When the member or mechanism connected with the push rod is required to be reset, the electromagnet is electrified, the electric magnetic force overcomes the force of the spring member, and the translational movement brake disc moves along with the moving core and disengages from the rotating brake disc to release the braking force, such that under the reactive force acting on the member or mechanism connected with the push rod (namely the force of the reset spring or the force of the braking spring of the braking portion, when the arrester is used), the push rod goes to move, the screw nut moves along the lead screw, and the lead screw is reversed correspondingly. The motor reverses in a no electrified condition until the push rod is moved to reset, that is, after the reset work condition requirement of the moved member or mechanism connected with the push rod is satisfied. Then, the power supply to the electromagnet is cut off, and the translational movement brake disc engage with the rotating brake disc to form the braking, so as to keep the member or mechanism connected with the push rod in the reset work condition requirement.

In an alternative embodiment of the present invention, the initial position of the screw nut on the push rod is located in the middle part of the lead screw. By the forward and backward rotation of the motor, the push rod has a reciprocally moving applied force which may drive the member or mechanism connected with the push rod to move in a reciprocating manner. The rest of the alternative embodiment is as the same as that of the above-mentioned embodiment. In a further alternative embodiment of the present invention, the initial position of the screw nut on the push rod is located in the outer end part of the lead screw. When the motor is electrically driven to operate, the push rod along with the screw nut inwardly moves along the lead screw, correspondingly to draw the push rod back, that is, to draw the member or mechanism connected with the push rod.

In a furthermore embodiment of the present invention, it is different from the above-mentioned embodiment in that, the lead screw 4 and the shaft axis of the motor 1 are not co-linear. Further, a drive mechanism is provided between the lead screw and the motor. The inner segment of the lead screw is connected with a driven member of the drive mechanism. A driving member of the drive mechanism is connected with the shaft of the motor. The rotating brake disc is connected with the driving member of the drive mechanism. The inner segment of the lead screw is provided with a supporting bearing. The operation relationship between the motor and the lead screw is achieved by a drive chain of a drive mechanism. The rest of this embodiment is as the same as that of the above-mentioned embodiment.

As apparent form the above, the present invention has the following advantages and benefits:
1. Because the brake pair acting on the motor is provided, together with the action of the electromagnet, the member or mechanism connected with the push rod is driven by the push rod to move till the work condition required motion state is achieved. Then, the power supply to the motor is cut off, and, the braking force from the engagement between the translational movement brake disc and the rotating brake disc prevent the motor to rotate, such that in the case that the motor is powered off, the push rod is kept in the moved state to satisfy the work condition required motion state of the moved member or mechanism. This brings the advantage of saving the power, decreasing the operating temperature rise, and, reducing the malfunctions.
2. When the push rod is reset, that is, after the reset work condition requirement of the moved member or mechanism connected with the push rod is satisfied, in the natural condition that the electromagnet is not electrified, the translational movement brake disc engage with the rotating brake disc to form the braking. Hence, in the natural condition that both the motor and the electromagnet are not electrified, the reset work condition requirement of the member or mechanism connected with the push rod may be kept.
3. Because the initial position of the screw nut on the push rod may be located in the middle part of the lead screw, by the forward and backward rotation of the motor, the push rod has a reciprocally moving applied force which may drive the member or mechanism connected with the push rod to move in a reciprocating manner. Further, in the condition that the electromagnet is not electrified, the member or mechanism connected with the push rod may be kept in the reciprocally moved condition. This not only brings the advantage of saving the power, decreasing the operating temperature rise, and, reducing the malfunctions, but also has the operating characteristic of a two-way cylinder and achieves more purposes effect.
4. Because the initial position of the screw nut on the push rod may be located in the outer end part of the lead screw. Once the initial position of the screw nut on the push rod is located in the outer end part of the lead screw, when the motor s electrically driven to operate, the push rod along with the screw nut inwardly moves along the lead screw, correspondingly to draw the push rod back, that is, to draw the member or mechanism connected with the push rod. Hence, the present invention has the advantage liking easy for mounting once the mounting position does not meet the space where the push rod outwardly moves.
5. By utilizing the electrically switch-on of the electromagnet, the braking from the brake pair is released, such that the member or mechanism connected with the push rod is in a free state, which is easy for inspection and maintenance.

The present invention will be further described in view of the exemplary embodiments with reference to the accompanying drawings.

### BRIEF DESCRIPTION OF THE DRAWINGS

Fig. 1 is a structural view of an electrical push device according to a first embodiment of the present invention, and this Fig. is also illustrated as the abstract of the drawings;
Fig. 2 is a structural view of the device according to a second embodiment, illustrating a modification of a brake pair 7;
Fig. 3 is a structural view of the device according to a third embodiment;
Fig. 4 is a structural view of the device according to a fourth embodiment;
Fig. 5 is a principle view of the device in a service condition according to the fourth embodiment;
Fig. 6 is a structural view of the device according to a fifth embodiment;
Fig. 7 is a structural view of the device according to a sixth embodiment;
Fig. 8 is a structural view of the device according to a seventh embodiment;
Fig. 9 is a structural view of the device according to an eighth embodiment, illustrating a modification of the electrical push device;
Fig. 10 is a structural view of the device according to a ninth embodiment;
Fig. 11 is a structural view of the device according to a tenth embodiment;
Fig. 12 is a structural view of the device according to an eleventh embodiment;
Fig. 13 is a structural view of the device according to a twelfth embodiment, illustrating another modification of the electrical push device; and
Fig. 14 is a structural view of the device according to a thirteenth embodiment, illustrating a further another modification of the electrical push device.

### DETAILED DESCRIPTION OF PREFERRED EMBODIMENTS OF THE IVENTION

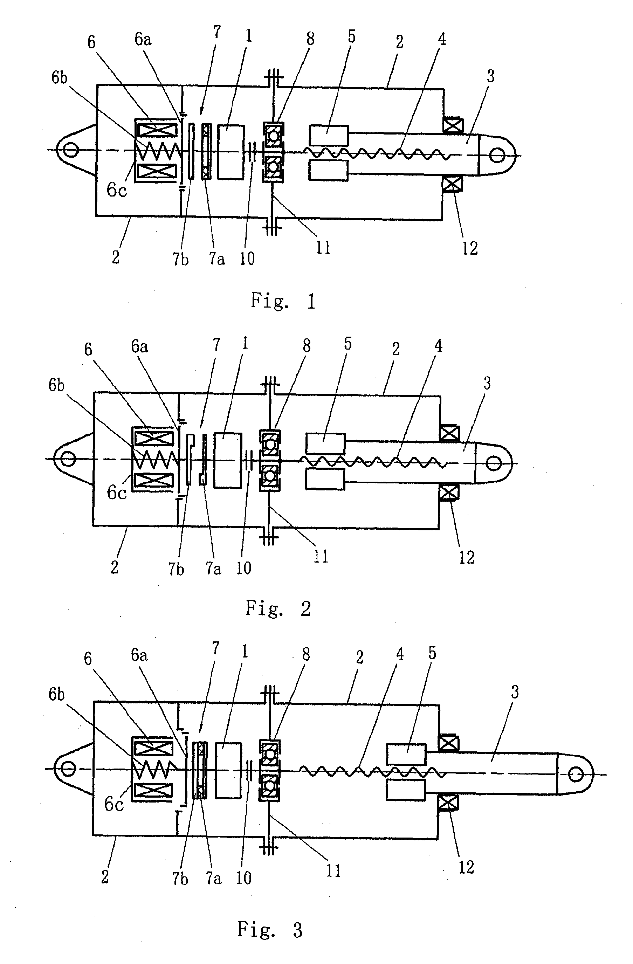

The first embodiment is shown in Fig. 1.

Referring to Fig. 1, according to the present invention, an electrical push device comprises a motor 1, a housing 2, an axially movable push rod 3 provided in the housing 2, a lead screw 4 provided in the push rod 3, and, a screw nut 5 provided in the inner end of the push rod 3, the screw nut 5 and the lead screw 4 constituting a screw pair. The screw nut 5 and the lead screw 4 may preferably adopt a ball lead screw and ball screw nut structure, although it is not limited to this according to the present invention, and any other suitable types of the screw pair my be adopted. The helix rise angle of the lead screw 4 which is engaged with the screw nut 5 is larger than the locking angle. The inner segment of the lead screw 4 is provided with a supporting bearing 8. The supporting bearing 8 is connected to the housing 2 through a member 11. The inner end of the lead screw 4 is connected with the shaft of the motor 1. Specifically, in the present embodiment, the motor 1 is located between the brake pair 7 and the inner end of the lead screw 4, and, the inner end of the lead screw 4 is connected with an output shaft end of a shaft of the motor 1. As shown in Fig. 1, the inner end of the lead screw 4 is connected with an output shaft end of a shaft of the motor 1 through a shaft coupling 10. The electrical push device according to the present invention further includes an electromagnet 6 and a brake pair 7. A spring 6b acting on the moving core 6a of the electromagnet 6 is provided in a stationary core 6c of the electromagnet 6. The electromagnet 6 preferably is a constant-current electromagnet. The brake pair 7 includes a rotating brake disc 7a and a translational movement brake disc 7b. The rotating brake disc 7a is connected with the shaft of the motor 1. Specifically, according to the embodiment shown in Fig. 1, the rotating brake disc 7a is connected with a rotating shaft end of the shaft of the motor 1. The brake pair 7 acts on the motor 1 and inhibits the rotation of the lead screw 4 by applying the brake on the motor 1. And, the brake pair 7 may maintain the push rod in an after-moved state under the energy-saving condition that the motor is cold. The translational movement brake disc 7b is connected with the moving core 6a of the electromagnet 6 and may axially movable in a straight line along with the moving core 6a without the rotation of the translational movement brake disc 7b. The electromagnet 6 is connected with the housing 2 through a member, and a ring seal 12 acting on the push rod 3 is provided at the end wall of the housing 2. The housing 2 is consisted of left and right (or upper and lower) cylinders.

In the present embodiment, the initial position of the screw nut 5 on the push rod 3 is located in the inner end part of the lead screw 4. When the motor 1 is electrically driven to operate, the push rod 3 along with the screw nut 5 outwardly moves along the lead screw 4, correspondingly to push the push rod 3 out, that is, to push the member or mechanism connected with the push rod. When the electromagnet 6 is in an electrically driven condition, as shown in Fig. 1, the translational movement brake disc7b and the rotating brake disc 7a are in a disengagement state, and, the push rod 3 returns to the state of being at the inner end part of the lead screw 4. When the electric source of the electromagnet 6 is cut off, the translational movement brake disc7b and the rotating brake disc 7a are engaged to produce a brake force, so as to maintain the push rod 3 in the state of being at the inner end part of the lead screw 4. The translational movement brake disc7b and the rotating brake disc 7a of the brake pair 7 have annular engaging faces. Specifically, one of the translational movement brake disc7b and the rotating brake disc 7a is provided with a brake friction surface. The engaging surface between the translational movement brake disc7b and the rotating brake disc 7a is a plane surface once the two are engaged with each other to form a brake.

The second embodiment is shown in Fig. 2.

Referring to Fig. 2, the present embodiment has a modified structure of the brake pair 7, based on the first embodiment. The translational movement brake disc7b and the rotating brake disc 7a of the brake pair 7 shown in Fig. 1 have the annular engaging faces, however, the translational movement brake disc7b and the rotating brake disc 7a of the brake pair 7 in the present embodiment have boss-type engaging faces, but the rest of the present embodiment is as the same as that of the first embodiment. Specifically, based on the embodiment shown in Fig. 1, a portion of the brake friction surface of the rotating brake disc 7a is provided on the translational movement brake disc7b, so as to form a boss-type structure.

The third embodiment is shown in Fig. 3.

The technical solution of the present embodiment is different from that of the first embodiment in that: the initial position of the screw nut 5 on the push rod 3 is located in the outer end part of the lead screw 4. When the motor 1 is electrically driven to operate, the push rod 3 along with the screw nut 5 inwardly moves along the lead screw 4, correspondingly to draw the push rod 3 back, that is, to draw the member or mechanism connected with the push rod. When the electromagnet 6 is in an electrically driven condition, as shown in Fig. 1, the translational movement brake disc7b and the rotating brake disc 7a are in an engagement state to maintain the push rod 3 in the state of being at the outer end part of the lead screw 4 by the brake force produced from the engagement between the translational movement brake disc7b and the rotating brake disc 7a. The rest of the present embodiment is as the same as that of the first embodiment.

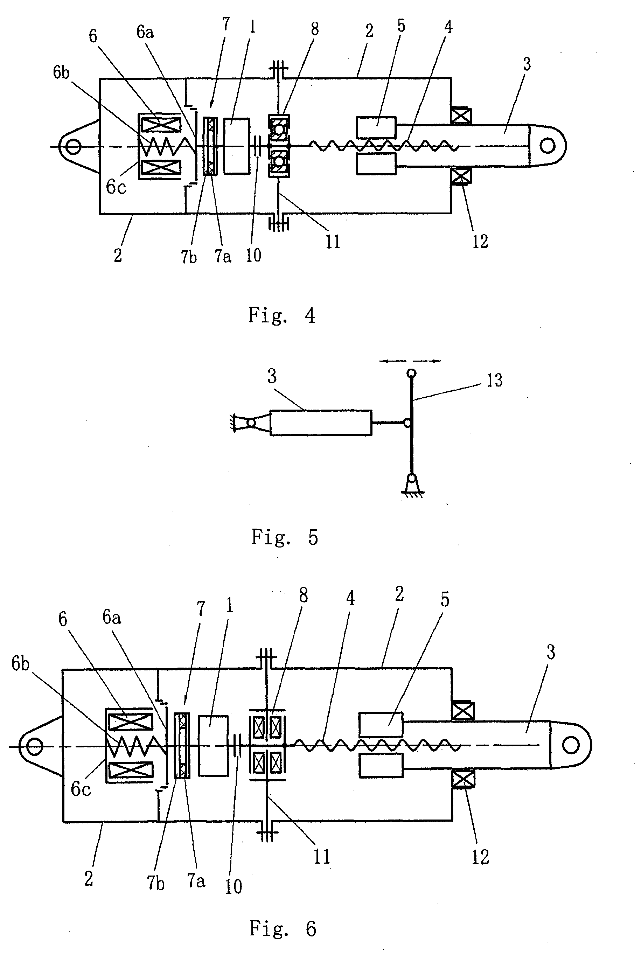

The fourth embodiment is shown in Fig. 4.

The technical solution of the present embodiment is different from that of the first embodiment in that: the initial position of the screw nut 5 on the push rod 3 is located in the middle part of the lead screw 4. When the motor 1 is electrically driven to operate in a positive rotation/in a negative rotation, the push rod 3 along with the screw nut 5 inwardly/outwardly moves along the lead screw 4. As shown in Fig. 5, when it is correspondingly to draw the push rod 3 back, that is, to draw the member or mechanism connected with the push rod 13, and, when it is correspondingly to push the push rod 3 out, that is, to push the member or mechanism connected with the push rod 13. As shown in Fig. 4, when the electric source of the electromagnet 6 is cut off, the translational movement brake disc7b and the rotating brake disc 7a are in an engagement state to maintain the push rod 3 in the state of being at the middle part of the lead screw 4 by the brake force produced from the engagement between the translational movement brake disc7b and the rotating brake disc 7a.

The fifth embodiment is shown in Fig. 6.

In this present embodiment, the supporting bearing 8 has a two-bearing structure and the thrust bearing is adopted, so as to satisfy the supporting for the lead screw 4 in a heavy load work condition. The rest of the present embodiment as shown in the figure is as the same as that of the fourth embodiment.

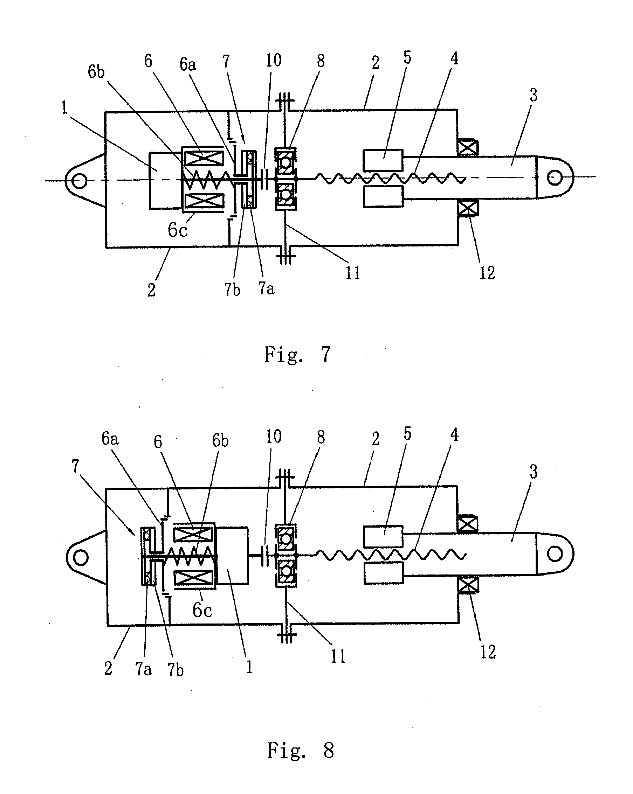

The sixth embodiment is shown in Fig. 7.

Fig. 7 shows a first modification of the configuration between the motor 1 and the electromagnet 6. An electrical push device comprises a motor 1, a housing 2, an axially movable push rod 3 provided in the housing 2, a lead screw 4 provided in the push rod 3, and, a screw nut 5 provided in the inner end of the push rod 3, the screw nut 5 and the lead screw 4 constituting a screw pair. The helix rise angle of the lead screw 4 which is engaged with the screw nut 5 is larger than the locking angle. The inner segment of the lead screw 4 is provided with a supporting bearing 8. The inner end of the lead screw 4 is connected with the shaft of the motor 1. An electromagnet 6 and a brake pair 7 are provided. A spring 6b acting on the moving core 6a of the electromagnet 6 is provided in a stationary core 6c of the electromagnet 6. The brake pair 7 includes a rotating brake disc 7a and a translational movement brake disc 7b. The rotating brake disc 7a is connected with the shaft of the motor 1. The translational movement brake disc 7b is connected with the moving core 6a of the electromagnet 6 and may axially movable in a straight line along with the moving core 6a.

As shown in Fig. 7, the motor 1 is located at the outer end of the electromagnet 6. The electromagnet 6 preferably is a constant-current electromagnet. The output shaft of the motor 1 is passed through the electromagnet 6 and is connected with the inner end of the lead screw 4 through a shaft coupling 10. The rotating brake disc 7a of the brake pair 7 is connected with the output shaft of the motor 1. The translational movement brake disc7b is connected with the moving core 6a, likewise.

The seventh embodiment is shown in Fig. 8.

Fig. 8 shows a second modification of the configuration between the motor 1 and the electromagnet 6 according to the present invention.

In the structures shown in Figs. 1-4 and 6, the motor 1 is located between the brake pair 1 and the inner end of the lead screw 4. The motor 1 in the present embodiment is located between the electromagnet 6 and the inner end of the lead screw 4. A rotating shaft end of a shaft of the motor 1 is passed through the electromagnet 6. The rotating brake disc 7a is connected with the rotating shaft end of the shaft of the motor 1. The translational movement brake disc7b is connected with the moving core 6a, likewise. The rest of the present embodiment is as the same as that of the preceding embodiment.

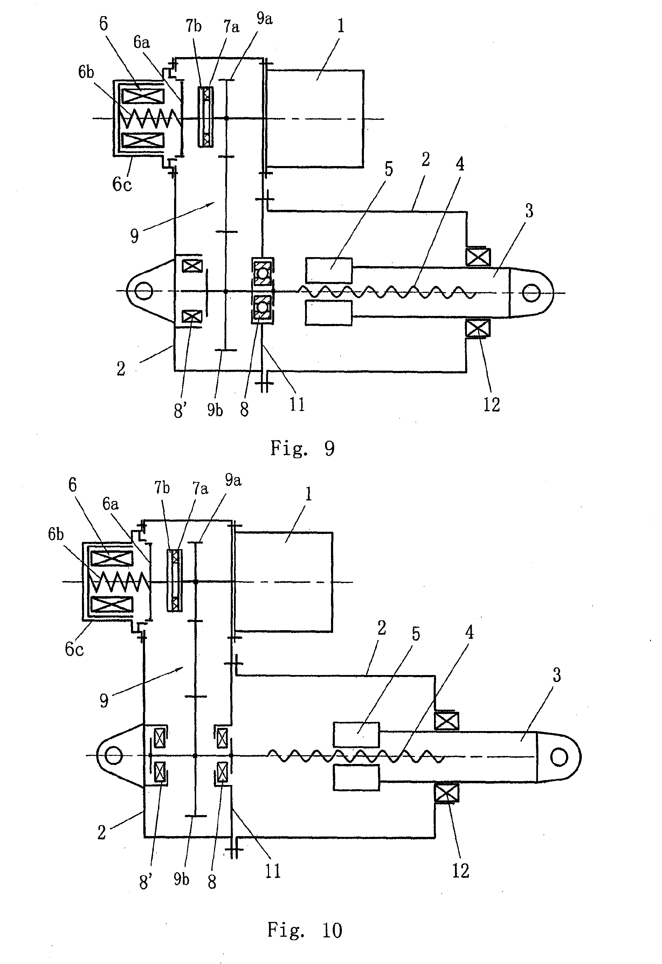

The eighth embodiment is shown in Fig. 9. Fig. 9 is a structural view of a modification of the device according to the first embodiment.

The technical solution of the present embodiment is different from that of the first embodiment in that: in the first embodiment, the lead screw 4 and the shaft axis of the motor 1 are co-linear. Contrarily, in the eighth embodiment, the lead screw 4 and the shaft axis of the motor 1 are not co-linear, but are, for example, paralleled with each other. Further, a drive mechanism 9 is provided between the lead screw 4 and the motor 1. The device comprises a motor 1, a housing 2, an axially movable push rod 3 provided in the housing 2, a lead screw 4 provided in the push rod 3, and, a screw nut 5 provided in the inner end of the push rod 3, the screw nut 5 and the lead screw 4 constituting a screw pair. The helix rise angle of the lead screw 4 which is engaged with the screw nut 5 is larger than the locking angle. The inner segment of the lead screw 4 is provided with a supporting bearing 8. The inner segment of the lead screw 4 is connected with a driven member 9b of the drive mechanism 9. A driving member 9a of the drive mechanism 9 is connected with the shaft of the motor 1. As shown in the Figure, the driving member 9a of the drive mechanism 9 is connected with an output shaft end of the shaft of the motor 1. The motor 1 and the push rod 3 are in a parallel shaft axial arrangement. The device further includes an electromagnet 6 and a brake pair 7. A spring 6b acting on the moving core 6a of the electromagnet 6 is provided in a stationary core 6c of the electromagnet 6. The brake pair 7 includes a rotating brake disc 7a and a translational movement brake disc 7b. The rotating brake disc 7a is connected with the driving member 9a of the drive mechanism 9. The inner segment of the lead screw 4 is further provided with a supporting bearing 8', that is, the supporting bearing has a two-bearing structure. The rotating brake disc 7a is connected with the shaft of the motor 1. Specifically, the rotating brake disc 7a in the present embodiment is connected with an output shaft end of the shaft of the motor 1. The translational movement brake disc 7b is connected with the moving core 6a of the electromagnet 6 and may axially movable in a straight line along with the moving core 6a.

In the above-mentioned and the below-mentioned embodiments, the drive mechanism 9 may adopt any suitable drive form, liking chain drive, gear drive, belt drive, etc.. For example, the driving member 9a may be a driving gear wheel, and the driven member 9b may be a driven gear wheel.

The ninth embodiment is shown in Fig. 10.

As shown in Fig. 9, the technical solution of the present embodiment is different from that of the eighth embodiment in that: the initial position of the screw nut 5 in the push rod 3 is located in the middle part of the lead screw 4. The rest of the present embodiment is as the same as that of the eighth embodiment.

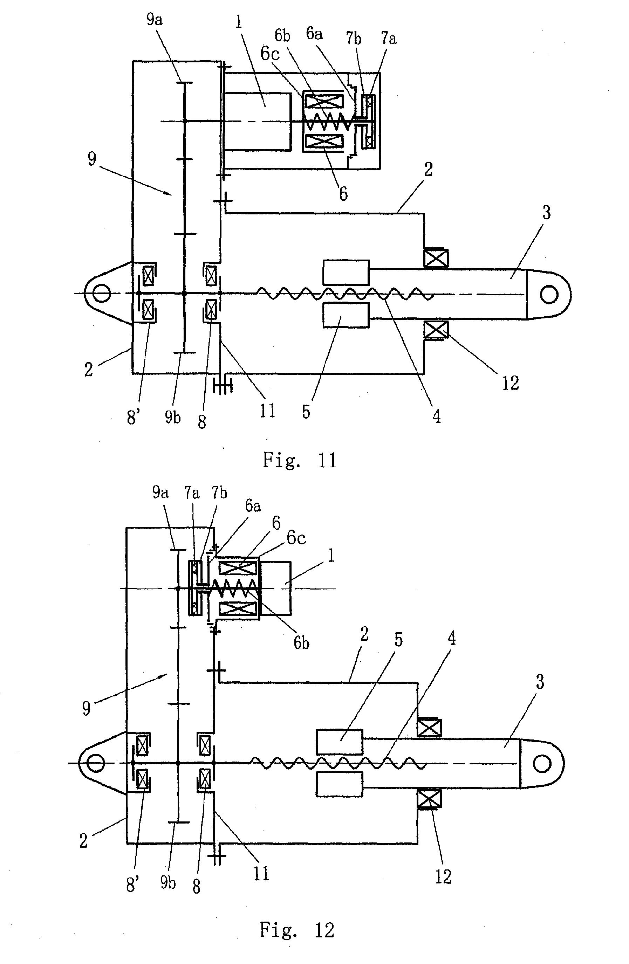

The tenth embodiment is shown in Fig. 11.

The present embodiment is a modification of the configuration between the motor 1 and the electromagnet 6 shown in Figs. 9 and 10.

As shown in this Figure, the electromagnet 6 is located at the rotating shaft end of the shaft of the motor 1. The rotating shaft end of the motor 1 is passed through the electromagnet 6 and is connected with the rotating brake disc 7a. The translational movement brake disc7b is connected with the moving core 6a of the electromagnet 6, likewise. The rotating shaft end of the shaft of the motor 1 is connected with the driving member 9a of the drive mechanism 9, likewise.

The eleventh embodiment is shown in Fig. 12.

Fig. 12 shows another modification of the configuration between the motor 1 and the electromagnet 6 shown in Figs. 9 and 10. As shown in this Figure, the electromagnet 6 is located between the motor 1 and the driving member 9a. The rotating shaft end of the shaft of the motor 1 is passed through the electromagnet 6 and is connected with the driving member 9a, likewise. The rotating brake disc 7a is connected with the output shaft end of the shaft of the motor 1. The translational movement brake disc7b is connected with the moving core 6a of the electromagnet 6, likewise.

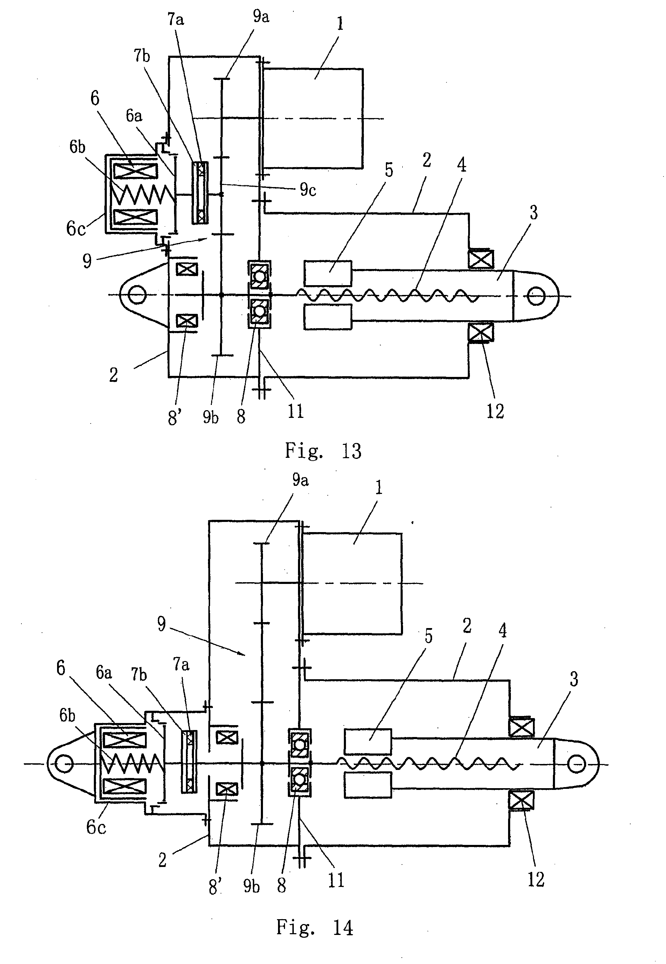

Fig. 13 is a structural view according to the twelfth embodiment, illustrating another structural modification of the device shown in Fig. 1.

The technical solution of the present embodiment is different from that of the first embodiment in that: in the first embodiment, the lead screw 4 and the brake pair 7 are not co-linear with the shaft axis of the motor 1. As shown in Fig. 13, a drive mechanism 9 is provided between the lead screw 4 and the motor 1. The device comprises a motor 1, a housing 2, an axially movable push rod 3 provided in the housing 2, a lead screw 4 provided in the push rod 3, and, a screw nut 5 provided in the inner end of the push rod 3, the screw nut 5 and the lead screw 4 constituting a screw pair. The helix rise angle of the lead screw 4 which is engaged with the screw nut 5 is larger than the locking angle. The inner segment of the lead screw 4 is provided with a supporting bearing 8. The inner segment of the lead screw 4 is connected with a driven member 9b of the drive mechanism 9. A driving member 9a of the drive mechanism 9 is connected with the shaft of the motor 1. As shown in the Figure, the driving member 9a of the drive mechanism 9 is connected with an output shaft end of the shaft of the motor 1. The motor 1 and the push rod 3 are in a parallel shaft axial arrangement. The device further includes an electromagnet 6 and the brake pair 7. A spring 6b acting on the moving core 6a of the electromagnet 6 is provided in a stationary core 6c of the electromagnet 6. The brake pair 7 includes a rotating brake disc 7a and a translational movement brake disc 7b. The rotating brake disc 7a is connected with the middle driving member 9c of the drive mechanism 9. The inner segment of the lead screw 4 is further provided with a supporting bearing 8', that is, the supporting bearing has a two-bearing structure. The rotating brake disc 7a is connected with the shaft of the motor 1. The translational movement brake disc 7b is connected with the moving core 6a of the electromagnet 6 and may axially movable in a straight line along with the moving core 6a.

In the above-mentioned embodiments, the drive mechanism 9 may adopt any suitable drive form, liking chain drive, gear drive, belt drive, etc.. For example, the driving member 9a may be a driving gear wheel, the driven member 9b may be a driven gear wheel, and the middle driving member 9c may be a middle driving gear wheel.

Although the lead screw 4 and the brake pair 7 are co-linear with the shaft axis of the motor 1, it is not limited to this. For example, its shaft axis may be in the manner that is not co-linear with the other, but it has an inclination angle relative to the shaft axis, in which the middle driving mechanism may be in any form liking bevel wheel.

Fig. 14 is a structural view according to the thirteenth embodiment, illustrating another further structural modification of the device shown in Fig. 1.

The technical solution of the present embodiment is different from that of the first embodiment in that: a drive mechanism 9 is provided between the lead screw 4 and the motor 1. The device comprises a motor 1, a housing 2, an axially movable push rod 3 provided in the housing 2, a lead screw 4 provided in the push rod 3, and, a screw nut 5 provided in the inner end of the push rod 3, the screw nut 5 and the lead screw 4 constituting a screw pair. The helix rise angle of the lead screw 4 which is engaged with the screw nut 5 is larger than the locking angle. The inner segment of the lead screw 4 is provided with a supporting bearing 8. The inner segment of the lead screw 4 is connected with a driven member 9b of the drive mechanism 9. A driving member 9a of the drive mechanism 9 is connected with the shaft of the motor 1. As shown in the Figure, the driving member 9a of the drive mechanism 9 is connected with an output shaft end of the shaft of the motor 1. The motor 1 and the push rod 3 are in a parallel shaft axial arrangement. The device further includes an electromagnet 6 and the brake pair 7. A spring 6b acting on the moving core 6a of the electromagnet 6 is provided in a stationary core 6c of the electromagnet 6. The brake pair 7 includes a rotating brake disc 7a and a translational movement brake disc 7b. The rotating brake disc 7a is connected with the driven member 9b of the drive mechanism 9. The inner segment of the lead screw 4 is further provided with a supporting bearing 8', that is, the supporting bearing has a two-bearing structure. The translational movement brake disc 7b is connected with the moving core 6a of the electromagnet 6 and may axially movable in a straight line along with the moving core 6a.

The present invention also may have several types of structural modifications.

In any one type of the structure of the device according to the present invention, the initial position of the screw nut 5 on the push rod 3 either may be located in the inner end part of the lead screw 4, or may be located in the middle part or the outer end part of the lead screw 4.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

## Claims

1. An electrical push device, comprising a motor (1), a housing (2), an axially movable push rod (3) provided in the housing (2), and a lead screw (4), whose helix rise angle is larger than the locking angle, being provided in the push rod (3), it is **characterized in that,** a screw nut (5) is provided in the inner end of the push rod (3), and the screw nut (5) and the lead screw (4) constitute a screw pair; the inner segment of the lead screw (4) is provided with a supporting bearing (8), and the inner end of the lead screw (4) is connected with the shaft of the motor (1); the electrical push device includes an electromagnet (6) and a brake pair (7); a spring (6b) acting on the moving core (6a) of the electromagnet (6) is provided in a stationary core (6c) of the electromagnet (6); the brake pair (7) includes a rotating brake disc (7a) and a translational movement brake disc (7b); the rotating brake disc (7a) is connected with the shaft of the motor (1), and, the translational movement brake disc (7b) is connected with the moving core (6a) of the electromagnet (6) and axially moves in a straight line along with the moving core (6a).

2. The electrical push device according to claim 1, it is **characterized in that**, the motor (1) is located between the brake pair (7) and the inner end of the lead screw (4), the inner end of the lead screw (4) is connected with an output shaft end of a shaft of the motor (1), and, the rotating brake disc (7a) is connected with a rotating shaft end of the shaft of the motor (1).

3. The electrical push device according to claim 1, it is **characterized in that**, the motor (1) is located at an outer end of the electromagnet (6), an output shaft end of a shaft of the motor (1) passes through the electromagnet (6) and is connected with the inner end of the lead screw (4) through a shaft coupling (10), and the rotating brake disc (7a) is connected onto the output shaft end of the shaft of the motor (1).

4. The electrical push device according to claim 1, it is **characterized in that**, the motor (1) is located between the electromagnet (6) and the inner end of the lead screw (4), a rotating shaft end of a shaft of the motor (1) passes through the electromagnet (6), and, the rotating brake disc (7a) is connected with the rotating shaft end of the shaft of the motor (1).

5. The electrical push device according to claim 1, it is **characterized in that**, the lead screw (4) and the shaft axis of the motor (1) are not co-linear, a drive mechanism (9) is provided between the lead screw (4) and the motor (1), the inner end of lead screw (4) is connected with a driven member (9b) in the drive mechanism (9), a driving member (9a) in the drive mechanism (9) is connected with an output shaft end of a shaft of the motor (1), and, the rotating brake disc (7a) in the brake pair (7) is connected with the driving member (9a) in the drive mechanism (9).

6. The electrical push device according to claim 5, it is **characterized in that**, the motor (1) is located between the driving member (9a) and the electromagnet (6), the rotating shaft end of the shaft of the motor (1) passes through the electromagnet (6), and the rotating brake disc (7a) is connected with the rotating shaft end of the shaft of the motor (1).

7. The electrical push device according to claim 5, it is **characterized in that**, the electromagnet (6) is located between the motor (1) and the rotating brake disc (7a), the rotating shaft end of the shaft of the motor (1) passes through the electromagnet (6) and is connected with the driving member (9a), and, the rotating brake disc (7a) is connected with the output shaft end of the shaft of the motor (1).

8. The electrical push device according to claim 1, it is **characterized in that**, the lead screw (4), the brake pair (7) and the shaft axis of the motor (1) are not co-linear, a drive mechanism (9) is provided between the lead screw (4) and the motor (1), the inner end of lead screw (4) is connected with a driven member (9b) in the drive mechanism (9), a driving member (9a) in the drive mechanism (9) is connected with an output shaft of the motor (1), and, the rotating brake disc (7a) in the brake pair (7) is connected with a middle driving member (9c) in the drive mechanism (9).

9. The electrical push device according to claim 1, it is **characterized in that**, the lead screw (4) and the shaft axis of the motor (1) are not co-linear, a drive mechanism (9) is provided between the lead screw (4) and the motor (1), the inner end of lead screw (4) is connected with a driven member (9b) in the drive mechanism (9), a driving member (9a) in the drive mechanism (9) is connected with an output shaft end of a shaft of the motor (1), and, the rotating brake disc (7a) in the brake pair (7) is connected with driven member (9b) in the drive mechanism (9).

10. The electrical push device according to any one of claims 1-9, it is **characterized in that**, the initial position of the screw nut (5) on the push rod (3) is located in the inner end part or the middle part or the outer end part of the lead screw (4).

11. The electrical push device according to any one of claims 1-9, it is **characterized in that**, the electromagnet (6) is a constant-current electromagnet.
